Europäisches Patentamt

European Patent Office

Office européen des brevets

(11) Veröffentlichungsnummer: **0 170 795 B1**

(12) **EUROPÄISCHE PATENTSCHRIFT**

(45) Veröffentlichungstag der Patentschrift: **09.09.92**

(21) Anmeldenummer: **85105862.8**

(22) Anmeldetag: **13.05.85**

(51) Int. Cl.⁵: **G21C 19/46**

(54) **Verfahren zur Rückgewinnung von Uran-Werten in einem extraktiven Wiederaufarbeitungsprozess für bestrahlte Kernbrennstoffe.**

(30) Priorität: **04.08.84 DE 3428878**

(43) Veröffentlichungstag der Anmeldung:
**12.02.86 Patentblatt 86/07**

(45) Bekanntmachung des Hinweises auf die
Patenterteilung:
**09.09.92 Patentblatt 92/37**

(84) Benannte Vertragsstaaten:
**BE FR GB NL**

(56) Entgegenhaltungen:
**US-A- 2 767 044**
**US-A- 2 768 871**
**US-A- 4 460 547**

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Ali, Sameh Abdel Hadi, Dr.**
**Zellmarkstrasse 7**
**W-7505 Ettlingen(DE)**
Erfinder: **Haag, Jürgen, Dr.**
**August-Heinrich-Franke-Strasse 11**
**W-6520 Worms 23(DE)**

**Beschreibung**

Die Erfindung betrifft ein Verfahren zur Rückgewinnung von Uran-Werten in einem extraktiven Wiederaufarbeitungsprozeß für bestrahlte Kernbrennstoffe.

Bisher wurden Kernreaktorbrennelemente zur Rezyklierung bestrahlter Kernbrennstoffe beispielsweise in Salpetersäure gelöst und das Uran durch Flüssig/Flüssig-Extraktion, wie z.B. im Purex-Prozeß oder bei der Aminextraktion oder bei säulenchromatographischen Trennoperationen, abgetrennt und in salpetersaurem Medium aufgearbeitet.

Die salpetersaure Rezyklierung von Kernbrennstoffen, deren Hauptbestandteil meist $UO_2$ darstellt, vor allem der Purex-Prozeß, ist eine längst bekannte und bewährte Verfahrensweise. Nach dem Erreichen der vorbestimmten Betriebsdauer bzw. des gewünschten Abbrandes, werden die zu ersetzenden Brennelemente aus dem Kernreaktor entfernt und beispielsweise einer ein- bis dreijährigen Lagerung zum Abklingen der kürzer lebigen Spaltprodukte unterworfen. Erst nach dieser Lagerdauer werden die Brennelemente zur Wiederaufarbeitungsanlage transportiert und dort in verhältnismäßig kleine Stücke zerteilt, aus denen der verbliebene Spaltstoff und die entstandenen Spaltprodukte etc. mit starker Salpetersäure herausgelöst werden. Die hierbei anfallende Auflöserlösung wird danach verdünnt und im ersten Extraktionszyklus des Prozesses in eine erste Kolonne geleitet, in welcher im Gegenstrom zur wäßrigen Auflöserlösung eine organische Extraktionsmittellösung zur Übernahme der Spaltstoffe Uran und Plutonium sowie kleinerer Mengen anderer Aktinoiden und geringer Mengen Spaltprodukte geführt wird. Der wäßrige, salpetersaure, nur noch sehr geringe Mengen Uran und Plutonium enthaltende Ablauf aus der Extraktionskolonne enthält die Hauptmenge an Spaltprodukten, Korrosionsprodukten etc. und stellt eine hochradioaktive Abfall-Lösung dar. Nach Waschen der organischen Phase mit verdünnter Salpetersäure wird das Plutonium mit einer wäßrigen Rückextraktionslösung unter gleichzeitigem Reduzieren des Oxidationszustandes des Plutoniums selektiv aus der organischen Phase in die wäßrige Phase gebracht. Danach wird das noch in der organischen Phase verbliebene Uran (die Hauptmenge der Spaltstoffe) ebenfalls in eine wäßrige Rückextraktionslösung überführt. Die wäßrigen Lösungen des Urans und des Plutoniums werden nun getrennt weiterverarbeitet, beispielsweise mit Hilfe von jeweils zwei weiteren Reinigungszyklen, um weitgehendst auch von den Spaltprodukten dekontaminiert zu werden.

Obwohl diese Verfahrensweise für lang bestrahlte und verhältnismäßig lang gekühlte Brennelemente beherrschbar ist und innerhalb der geeigneten Verfahrensbedingungen betriebssicher durchgeführt werden kann, weist sie einige Nachteile auf. Beispielsweise fallen außer der hochaktiven Abfall-Lösung aus der ersten Extraktionskolonne an verschiedenen Stellen zusätzliche wäßrige Abfallströme an, die radioaktive Spaltprodukte etc. enthalten. Diese Abfallströme müssen eingedampft und entweder einer weiteren Bearbeitung oder der Verfestigung zugeführt werden. Außerdem können in geringem Maßstabe Spaltstoffverluste aus den Produktströmen des Prozesses durch die Bildung von Degradationsprodukten von den Extraktionsmitteln entstehen, wobei die Degradationsprodukte mit geringen Mengen Spaltstoffen feste Bindungen eingehen und in die wäßrigen Abfallströme gelangen.

Der Erfindung liegt die Aufgabe zugrunde, ein Verfahren zu schaffen, mit welchem in einem extraktiven Wiederaufarbeitungsprozeß für bestrahlte Kernbrennstoffe in einem Verfahrensschritt nach der Auflösung des Kernbrennstoffes, gleich an welcher geeigneten Stelle des Prozesses, Uran-Werte aus einer sie, Plutonium und Spalt- und Korrosionsprodukte enthaltenden, organischen Extraktionsmittellösung in eine wäßrige Phase überführt und gleichzeitig von Plutonium und von den Spalt- und Korrosionsprodukten auf einfache Weise mit verhältnismäßig hohem Dekontaminationsgrad getrennt werden können. Beispielsweise soll das erfindungsgemäße Verfahren im Purex-Prozeß und dort sowohl im ersten Extraktionszyklus als auch in den Uran-Reinigungszyklen anwendbar sein. Es soll aber auch in anderen Extraktionsprozessen, bei welchen Uran-Werte rückgewonnen werden sollen, verwendet werden können.

Die Aufgabe wird erfindungsgemäß dadurch gelöst, daß

a) die die Spaltstoffe Uran und Plutonium sowie eine Teilmenge (A) Spalt- und Korrosionsprodukte enthaltende organische Extraktionsmittellösung aus dem ersten Extraktionsschritt des Prozesses mit einer wäßrigen, basischen, Karbonationen enthaltenden Lösung behandelt wird, wobei die Spaltstoffe und zumindest ein Teil von A in die wäßrige Phase rückextrahiert werden,

b) die beiden Phasen voneinander getrennt werden,

c) aus der wäßrigen Phase das Plutonium zusammen mit einer Teilmenge B der Spaltprodukte in bekannter Weise entfernt wird,

d) die verbleibende wäßrige, den Uran-karbonato-Komplex und eine geringe Restmenge C an Spaltprodukten enthaltende Lösung auf ein Verhältnis der Uranylionen-Konzentration zu Karbonationen - bzw. $CO_3^{--}/HCO_3^{-}$-Konzentration von $1(UO_2^{++})$ zu $4{,}5(CO_3^{--}$ bzw. $CO_3^{--}/HCO_3^{-})$ oder darunter bei einer maximalen U-Konzentration von nicht mehr als 60 g/l eingestellt wird.

e) die eingestellte Lösung zur Adsorption der Spaltproduktionen bzw. der Spaltprodukte enthaltenden Ionen über einen basischen Anionenaustauscher aus einer mit zu einem überwiegenden Teil tertiären Aminogruppen und zu einem geringen Teil quarternären Ammoniumgruppen versehenen Polyalken-Matrix geleitet wird und der nicht adsorbierte Uranyl-karbonato-Komplex durch Abtrennen der uranhaltigen, verbleibenden Lösung vom Ionenaustauscher weitgehend spaltproduktfrei wiedergewonnen bzw. dekontaminiert wird.

Die wäßrige, basische, Karbonationen enthaltende Lösung, mit der in Verfahrensschritt a) die organische Extraktionsmittel-Lösung behandelt wird, kann maximal 2,5 molar an $CO_3^{--}$-Ionen sein. Sie kann jedoch außer $CO_3^{--}$-Ionen auch zusätzlich $HCO_3^-$-Ionen, maximal ca. 1 Mol/l, enthalten. Brauchbare Rückextraktionslösungen dieser Art weisen einen pH-Wert auf von pH 5 bis pH 11.

Die Abtrennung des Plutoniums kann beispielweise durch Stehenlassen oder Erhitzen der Lösung, wobei Plutoniumoxidhydrat und eine Teilmenge B (B<A) der Spaltprodukte etc. ausfallen, und anschließendes Filtrieren oder Zentrifugieren erfolgen.

Eventuell während der Bestrahlung des Urans im Kernreaktor gebildetes Neptunium geht im erfindungsgemäßen Verfahren den Weg des Urans.

In einer besonderen Ausbildung des erfindungsgemäßen Verfahrens wird die wäßrige Lösung aus Schritt c) auf ein Verhältnis der Uranylionen-Konzentration zu Karbonationen/Hydrogenkarbonationen-Konzentration von 1 : 5 bis 1 : 8 eingestellt. Vorteilhafterweise wird die wäßrige Lösung aus Schritt c) bei einer Uran-Konzentration von 60 g/l auf ein Verhältnis $UO_3^{++}$-Konzentration zu $CO_3^{--}/HCO_3^-$-Konzentration von 1 : 5 eingestellt.

Als basischer Anionenaustauscher wird ein solcher aus Polyalken-epoxypolyamin mit tertiaren Aminogruppen und quarternären Ammoniumgruppen des chemischen Aufbaus $R-N(CH_3)_2 \cdot HCl$ und $R-N^+(CH_3)_2-(C_2H_4OH)Cl^-$, wobei R das Molekül ohne Aminogruppen bedeutet, verwendet.

Vorteilhafterweise weist die wäßrige Lösung (Schritt e) eine Hydrogenkarbonationen-Konzentration zwischen 0 und 1 Mol/l auf. Die $CO_3^{--}$-Konzentration in der wäßrigen Lösung (Schritt e) beträgt maximal 2,5 M/l und der pH-Wert der wäßrigen Lösung (Schritt e) liegt im Bereich von pH 7 bis pH 11.

Das erfindungsgemäße Verfahren ist auch in Abwesenheit von $HCO_3^-$-Ionen durchführbar, doch sind die Verfahrensbedingungen leichter einstellbar, wenn in der wäßrigen Lösung $HCO_3^-$-Ionen vorhanden sind.

Der Einsatzbereich des Verfahrens umspannt einen großen Konzentrationsschwankungsbereich des zu dekontaminierenden Uranstromes. Ist die Urankonzentration in der Lösung gegenüber der Karbonatkonzentration sehr klein, so daß beispielsweise eine freie $CO_3^{--}/HCO_3^-$-Konzentration höher als 0,6 Mol/l vorliegt, so kann zur Optimierung der Spaltproduktrückhaltungen der zu große Karbonatüberschuß entweder durch Zudosierung einer Mineralsäure, vorzugsweise $HNO_3$, zerstört oder durch Zugabe von z.B. $Ca(OH)_2$ eine bestimmte Menge an Karbonationen weggefangen werden.

Im umgekehrten Fall jedoch, d.h. liegen höhere Urankonzentrationen vor, so muß durch Zugabe von ausreichenden Mengen an $CO_3^{--}/HCO_3^-$-Ionen der Uranverteilungskoeffizient so weit minimiert werden, daß die Spaltprodukt-Spezies nicht durch das Uran vom Ionenaustauscher verdrängt werden. Die gewünschten Trennungen lassen sich noch bei Urankonzentrationen von ca. 60 g U/l durchführen. Die Begrenzung des Verfahrens zu höheren U-Konzentrationen hin ist durch die Uranlöslichkeit in Karbonat-Hydrogenkarbonat-Lösungen begründet.

Zwar wurde ein Verfahren zur Abtrennung von Aktinoidenionen aus wäßrigen, basischen, karbonathaltigen Lösungen aus der Deutschen Offenlegungsschrift 31 44 974 bekannt, bei welchem die Aktinoidenionen als Karbonato-Komplexe an basischen Ionenautauschern adsorbiert und nach Abtrennen des beladenen Ionenaustauschers von der Ausgangslösung mit Hilfe einer wäßrigen Lösung wieder vom Ionenaustauscher desorbiert und weiterverarbeitet werden, und bei welchem zur Adsorption der Aktinoidenionen ebenfalls ein basischer Anionenaustauscher aus einer mit zu einem überwiegenden Teil tertiären Aminogruppen und zu einem geringen Teil quarternären Ammoniumgruppen versehenen Polyalken-Matrix verwendet wird, doch ist dieses Verfahren nur sinnvoll anwendbar auf wäßrige, karbonathaltige Abfall-Lösungen oder Waschlösungen etc. Für entsprechende Lösungen mit einem relativ hohen Gehalt an Uranyl-Ionen würde der apparative Aufwand zu groß werden und die genaue Einhaltung der Karbonationen-Konzentration im Bereich der Verhältnisse $UO_2^{++}$-Konzentration zu $CO_3^{--}$-Konzentration zwischen 1 : 3 und 1 : 4 nicht in jedem Falle problemlos sein. Außerdem wäre das Verfahren nach der DE-OS 31 44 974 für größere Uran-Konzentrationen in der Lösung zu umständlich, da die Uranylionen, im Gegensatz zum erfindungsgemäßen Verfahren, vom Anionenaustauscher adsorbiert werden, wobei die Spaltproduktionen mit der verbleibenden Lösung durch den Anionenaustauscher hindurch laufen und das Uran vom Ionenaustauscher wieder eluiert werden muß. Dem gegenüber werden die Uranylionen im erfindungsgemäßen Verfahren an der gleichen Anionenaustauscherart nicht festgehalten, sondern nur die noch vorhandenen Spaltprodukt-Spezies.

Die wesentlichen Vorteile des erfindungsgemäßen Verfahrens liegen darin, daß die Dekontamination des Urans von den noch vorhandenen Spaltprodukten mit einer verhältnismäßig kleinen Menge des Anionenaustauschers, z.B. in einer verhältnismäßig kleinen Ionenaustauschersäule, durchgeführt werden kann, daß der mit den Spaltprodukten beladene Ionenaustauscher (mit oder ohne Säule) ohne Zwischenbehandlung direkt zur Abfallbehandlung und -beseitigung gegeben werden kann. Durch ein- oder mehrmaliges Wiederholen des erfindungsgemäßen Verfahrensan weiteren kleinen Anionenaustauscherchargen erhält man einen hohen Reinheitsgrad des wiederzugewinnenden Urans.

Aufgrund der raschen Durchführbarkeit des erfindungsgemäßen Verfahrens fällt für die Wiederaufarbeitung und Rückführung des Urans in den Kernbrennstoffkreislauf die bei den Extraktionsverfahren nachteilige Bildung von Degradationsprodukten des Extraktionsmittels oder des Verdünnungsmittels weg. Das erfindungsgemäße Verfahren zeichnet sich durch eine sehr sichere Prozeßführung aus. Beispielsweise muß der organische Anionenaustauscher in keiner Phase des Verfahrens mit korrosiven oder stark oxidierenden Medien in Kontakt gebracht werden.

Das erfindungsgemäße Verfahren arbeitet mit basischen Medien, die die höchstmögliche Sicherheit gegen Freisetzung flüchtiger Jodkomponenten bieten. Die im erfindungsgemäßen Verfahren verwendete Lösung, welche bis zu maximal 2,5 Mol/l $Na_2CO_3$ und bei geringerer $CO_3^-$ - Konzentration bis zu ca. 1 Mol/l $NaHCO_3$ enthalten kann, ist chemisch denkbar einfach zu beherrschen und strahlenchemisch resistent. Korrosionsprobleme sind nicht vorhanden. Außerdem ist bei dem erfindungsgemäßen Verfahren der Aufwand an Chemikalien, Apparaturen und Arbeitszeit sehr niedrig.

Im folgenden wird die Erfindung anhand zweier beispielhafter Versuche näher erläutert.

In zwei dynamischen Kolonnendurchlaufexperimenten wurden bei verschiedenen Uran-zu Karbonat-/Hydrogenkarbonat-Verhältnissen die Wirksamkeit des erfindungsgemäßen Verfahrens untersucht.

Die durchschnittliche Spaltprodukt-Rückhaltung lag bei einem Kolonnendurchlauf unter den angegebenen Beladebedingungen bei > 97 % für Cer, Zirkonium und Niob; bei Ruthenium lag die Rückhaltung bei ca. 80 %.

Nachfolgend sind die Ergebnisse im einzelnen angegeben:

**Aufgabelösung:**

| | | | |
|---|---|---|---|
| Volumen: | 100 ml | | |
| U-Gehalt: | 1,19 g | | |
| U: $CO_3^{--}$/$HCO_3^-$ : | 1 : 7 | bzw. | 1 : 6 |
| $Na_2CO_3$: | 3,24 g $\triangleq$ 90 % | bzw. | 2,78 g |
| $NaHCO_3$: | 0,28 g $\triangleq$ 10 % | bzw. | 0,24 g |

| | |
|---|---|
| Kolonne : | 15 mm |
| Durchmesser: | 15 mm |
| Höhe: | 130 mm |
| Bettvolumen: | 20 ml |
| Aufgabegeschwindigkeit: | 0,5 ml/cm$^2$ · sec. |
| Nachwaschlsg.: | 0,2 molare $Na_2CO_3$-Lösung [x)] |
| Anzahl der Fraktionen: | 4 x 20 |

x) anstelle einer $Na_2CO_3$-Lösung kann auch eine entsprechend andere Alkali- oder eine Ammonium-Karbonatlösung eingesetzt werden.

4

Ionenaustauscher:

mäßig basischer Anionenaustauscher aus Polyalken-epoxypolyamin mit tertiären Amino- und quarternären Ammoniumgruppen mit der Handelsbezeichnung Bio-Rex 5 (der Firma Bio-Rad Laboratories, USA).

Versuch 1    %-Anteile in den durchgelaufenen Lösungen

|  | Uran | Cer | Ruthenium | Zirkonium | Niob |
|---|---|---|---|---|---|
| 100 ml D.L. | 81,7 | 1,66 | 13,43 | 1,36 | 1,06 |
| 20 ml W.1 | 14,8 | 0,32 | 4,06 | 0,26 | 0,19 |
| 20 ml W.2 | 2,1 | 0,27 | 1,31 | 0,18 | 0,13 |
| 20 ml W.3 | 0,8 | 0,14 | 0,55 | 0,09 | 0,06 |
| 20 ml W.4 | 0,4 | 0,10 | 0,29 | 0,07 | 0,05 |
| Summe: | 99,8 | 2,49 | 19,64 | 1,96 | 1,49 |

Versuch 2    %-Anteile in den durchgelaufenen Lösungen

|  | Uran | Cer | Ruthenium | Zirkonium | Niob |
|---|---|---|---|---|---|
| 100 ml D.L. | 80,5 | 1,84 | 13,51 | 1,38 | 1,31 |
| 20 ml W.1 | 15,0 | 0,35 | 4,20 | 0,27 | 0,22 |
| 20 ml W.2 | 2,6 | 0,25 | 1,20 | 0,24 | 0,16 |
| 20 ml W.3 | 1,0 | 0,15 | 0,43 | 0,08 | 0,06 |
| 20 ml W.4 | 0,6 | 0,10 | 0,31 | 0,06 | 0,05 |
| Summe: | 99,7 | 2,69 | 19,65 | 2,03 | 1,80 |

D.L. =  Durchlauf der Speiselösung (100 ml).

W.  =  Waschlösungen

**Patentansprüche**

1.   Verfahren zur Rückgewinnung von Uran-Werten in einem extraktiven Wiederaufarbeitungsprozeß für bestrahlte Kernbrennstoffe,
dadurch gekennzeichnet, daß
a) die die Spaltstoffe Uran und Plutonium sowie eine Teilmenge (A) Spalt- und Korrosionsprodukte enthaltende organische Extraktionsmittellösung aus dem ersten Extraktionsschritt des Prozesses mit einer wäßrigen, basischen, Karbonationen enthaltenden Lösung behandelt wird, wobei die Spaltstoffe und zumindest ein Teil von A in die wäßrige Phase rückextrahiert werden,

b) die beiden Phasen voneinander getrennt werden,

c) aus der wäßrigen Phase das Plutonium zusammen mit einer Teilmenge B der Spaltprodukte in bekannter Weise entfernt wird,

d) die verbleibende wäßrige, den Uran-karbonato-Komplex und eine geringe Restmenge C an Spaltprodukten enthaltende Lösung auf ein Verhältnis der Uranylionen-Konzentration zu Karbonationen- bzw. $CO_3^-$/$HCO_3^-$-Konzentration von 1($UO_2^{++}$) zu 4,5($CO_3^{--}$ bzw. $CO_3^{--}$/$HCO_3^-$) oder darunter bei einer maximalen U-Konzentration von nicht mehr als 60 g/l eingestellt wird,

e) die eingestellte Lösung zur Adsorption der Spaltproduktionen bzw. der Spaltprodukte enthaltenden Ionen über einen basischen Anionenaustauscher aus einer mit zu einem überwiegenden Teil tertiären Aminogruppen und zu einem geringen Teil quarternären Ammoniumgruppen versehenen Polyalken-Matrix geleitet wird und der nicht adsorbierte Uranyl-karbonato-Komplex durch Abtrennen der uranhaltigen, verbleibenden Lösung vom Ionenaustauscher weitgehend spaltproduktfrei wiedergewonnen bzw. dekontaminiert wird.

2. Verfahren nach Anspruch 1, dadurch gekennzeichnet, daß die wäßrige Lösung aus Schritt c) auf ein Verhältnis der Uranylionen-Konzentration zu Karbonationen/Hydrogenkarbonationen-Konzentration von 1 : 5 bis 1 : 8 eingestellt wird.

3. Verfahren nach Anspruch 1, dadurch gekennzeichnet, daß die wäßrige Lösung aus Schritt c) bei einer U-Konzentration von 60 g/l auf ein Verhältnis $UO_2^{++}$-Konzentrationzu $CO_3^{--}$/$HCO_3^-$-Konzentration von 1 : 5 eingestellt wird.

4. Verfahren nach Anspruch 1, dadurch gekennzeichnet, daß als basischer Anionenaustauscher ein solcher aus Polyalken-epoxypolyamin mit tertiären Aminogruppen und quarternären Ammoniumgruppen des chemischen Aufbaus $R-N(CH_3)_2 \cdot HCl$ und $R-N^+(CH_3)_2(C_2H_4OH)Cl^-$, wobei R das Molekül ohne Aminogruppen bedeutet, verwendet wird.

5. Verfahren nach Anspruch 1, dadurch gekennzeichnet, daß die wäßrige Lösung (Schritt e) eine Hydrogenkarbonationen-Konzentration zwischen 0 und 1 Mol/l aufweist.

6. Verfahren nach Anspruch 1, dadurch gekennzeichnet, daß die $CO_3^{--}$-Konzentration in der wäßrigen Lösung (Schritt e) maximal 2,5 Mol/l beträgt.

7. Verfahren nach Anspruch 1, dadurch gekennzeichnet, daß der pH-wert der eingestellten wäßrigen Lösung (Schritt e) im Bereich von pH 7 bis pH 11 liegt.

**Claims**

1. Method for recovering uranium values in an extractive reprocessing process for irradiated nuclear fuels, characterised in that

a) the organic solution of extracting agent from the first extraction step of the process, containing the fission substances uranium and plutonium as well as a partial quantity (A) of fission and corrosion products, is treated with an aqueous, basic solution containing carbonate ions, the fission substances and at least a portion of A being extracted back into the aqueous phase;

b) the two phases are separated from each other;

c) the plutonium, together with a partial quantity B of the fission products, is removed from the aqueous phase in known manner;

d) the remaining aqueous solution, which contains the uranium carbonato complex and a small residual quantity C of fission products, is adjusted to a ratio of the uranyl ion concentration relative to the carbonate ion concentration, i.e. the $CO_3^{--}$/$HCO_3^-$ concentration of 1($UO_2^{++}$) to 4.5($CO_3^{--}$), i.e. $CO_3^{--}$/$HCO_3^-$) or less with a maximum U concentration of no more than 60 g/l;

e) the adjusted solution for the adsorption of the fission product ions, i.e. the ions containing fission products, is conducted, via a basic anion exchanger, from a polyalkene matrix, which is provided with a large portion of tertiary amino groups and with a small portion or quaternary ammonium groups, and the non-adsorbed uranyl carbonato complex is recovered in a state largely free of fission products, i.e. decontaminated, by separating the remaining, uranium-containing solution from

EP 0 170 795 B1

the ion exchanger.

2. Method according to claim 1, characterised in that the aqueous solution from step c) is adjusted to a ratio of the uranyl ion concentration to the carbonate ion/hydrogen carbonate ion concentration of 1 : 5 to 1 : 8.

3. Method according to claim 1, characterised in that the aqueous solution from step c), with a U concentration of 60 g/l, is adjusted to a ratio of the $UO_2^{++}$ concentration to the $CO_3^{--}/HCO_3^-$ concentration of 1 : 5.

4. Method according to claim 1, characterised in that the basic anion exchanger used is one formed from polyalkene-epoxypolyamine with tertiary amino groups and quaternary ammonium groups of the chemical structure $R\text{-}N(CH_3)_2 \cdot HCl$ and $R\text{-}N^+ (CH_3)_2 (C_2H_4OH)Cl^-$, R representing the molecule without amino groups.

5. Method according to claim 1, characterised in that the aqueous solution (step e) has a hydrogen carbonate ion concentration of between 0 and 1 mol/l.

6. Method according to claim 1, characterised in that the maximum $CO_3^{--}$ concentration in the aqueous solution (step e) is 2.5 mol/l.

7. Method according to claim 1, characterised in that the pH value of the set aqueous solution (step e) lies in the range of between pH 7 and pH 11.

**Revendications**

1. Procédé de récupération de valeurs d'uranium dans un procédé extractif de retraitement pour matières combustibles nucléaires irradiées, caractérisé en ce que :

a) la solution d'agent d'extraction organique contenant les substances de fission uranium et plutonium ainsi qu'une quantité partielle (A) des produits de fission et de corrosion provenant de la première étape d'extraction du procédé, est traitée par une solution aqueuse, basique contenant des ions carbonate, dans laquelle les substances de fission et au moins une partie de A sont reextraites dans la phase aqueuse,

b) les deux phases sont séparés l'une de l'autre,

c) on élimine de la phase aqueuse d'une manière connue, le plutonium ensemble avec une quantité partielle B des produits de fission d'une manière connue,

d) la solution aqueuse restante qui contient le complexe carbonate-uranium et une faible quantité résiduelle C de produits de fission est ajustée à un rapport de la concentration en ions uranyl à la concentration en ions carbonate ou à la concentration en $CO_3^{--}/HCO_3^-$ de 1($UO_2^{++}$) à 4,5 ($CO_3^{--}$ ou $CO_3^{--}/HCO_3$) ou en-dessous pour une concentration en U maximale non supérieue à 60 g/litre,

e) la solution ajustée pour l'adsorption des productions de fission ou des ions renfermant les produits de fission est amenée sur un échangeur d'anions basique à base d'une matrice en polyalcoylène pourvue pour une part prédominante de groupes aminés tertiaires et pour une faible partie de groupes d'ammonium quaternaires et le complexe carbonato-uranyl non adsorbé est récupéré ou décontaminé largement débarrassé de produit de fission.par séparation de la solution uranifère restante de l'échangeur d'ions.

2. Procédé selon la revendication 1, caractérisé en ce que la solution aqueuse provenant de l'étape c) est ajustée à un rapport de la concentration des ions uranyl à la concentration des ions carbonate/ions hydrogéno-carbonate, de 1:5 à 1:8.

3. Procédé selon la revendication 1, caractérisé en ce que l'on ajuste la solution aqueuse provenant de l'étape c) pour une concentration en U de 60 g/l, à un rapport de la concentration en $UO_2^{++}$/à la concentration en $CO_3^{--}/HCO_3^-$ de 1:5.

4. Procédé selon la revendication 1, caractérisé en ce que comme échangeur d'anions basique, on utilise celui à base de polyalcoylène-époxypolyamine avec des groupes aminés tertiaires et des groupes d'ammonium quaternaires de structure chimique $R\text{-}N^{(+)}(CH_3)_2 (C_2H_4OH) Cl^{(-)}$ dans lesquelles R

7

représente la molécule sans groupe aminé.

5. Procédé selon la revendication 1, caractérisé en ce que la solution aqueuse (étape e) a une concentration des ions hydrogénocarbonates comprise entre 0 et 1 mole/l.

6. Procédé selon la revendication 1, caractérisé en ce que la concentration en $CO_3^{--}$ dans la solution aqueuse (étape e) se monte au maximum à 2,5 mole/l.

7. Procédé selon la revendication 1, caractérisé en ce que la valeur de pH de la solution aqueuse ajustée (étape e) se situe dans la gamme de pH 7 à pH 11.